Europäisches Patentamt

(19) European Patent Office

Office européen des brevets

(11) **EP 1 475 229 A2**

(12) **EUROPÄISCHE PATENTANMELDUNG**

(43) Veröffentlichungstag:
**10.11.2004 Patentblatt 2004/46**

(51) Int Cl.[7]: **B32B 27/36**, C08J 5/18

(21) Anmeldenummer: **04008943.5**

(22) Anmeldetag: **15.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **22.04.2003 DE 10318098**

(71) Anmelder: **Mitsubishi Polyester Film GmbH 65203 Wiesbaden (DE)**

(72) Erfinder:
• **Pfeiffer, Herbert, Prof., Dr. 55126 Mainz (DE)**

• **Hilkert, Gottfried, Dr. 55291 Saulheim (DE)**
• **Bennett, Cynthia, Dr. 55232 Alzey (DE)**
• **Stopp, Andreas 55218 Ingelheim (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(54) **Coextrudierte, heisssiegelbare und peelfähige Polyesterfolie mit leichter Peelbarkeit, Verfahren zu ihrer Herstellung und ihre Verwendung**

(57) Die Erfindung betrifft eine coextrudierte, transparente, biaxial orientierte Polyesterfolie, enthaltend eine Basisschicht (B) und eine heißsiegelbare und zumindest gegenüber APET peelfähige Deckschicht (A), wobei die heißsiegelbare und peelfähige Deckschicht (A) aus

a) 80-98 Gew.-% Polyester und
b) 2-10 Gew.-% anorganischen und/oder organischen Partikeln mit einem mittleren Durchmesser $d_{50}$ von 2,0 bis 8,0 µm (bezogen auf die Masse der Deckschicht (A))
besteht, wobei
c) der Polyester aus 30-95 Mol-% an Einheiten aufgebaut ist, die auf mindestens eine aromatische Dicarbonsäure, und 5-70 Mol-% an Einheiten, die auf mindestens eine aliphatische Dicarbonsäure zurückgehen,
d) das Verhältnis aus Teilchengröße $d_{50}$ und Schichtdicke $d_A$ der Deckschicht (A) größer als 1,3 ist und
e) die Schichtdicke der Deckschicht (A) $d_A$ 0,5 bis 2,5 µm beträgt.

Die Erfindung betrifft weiterhin ein Verfahren zur Herstellung der Folie und ihre Verwendung.

**Beschreibung**

Die Erfindung betrifft eine coextrudierte, peelfähige, transparente und biaxial orientierte Polyesterfolie mit einer Basisschicht (B) und mindestens einer auf dieser Basisschicht (B) aufgebrachten Deckschicht (A). Die Deckschicht (A) ist heißsiegelbar und zeichnet sich durch eine leichte Peelbarkeit (easy peel, insbesondere zu APET/CPET-Menüschalen (APET = amorphes Polyethylenterephthalat (PET); CPET = kristallines PET)) aus. Die heißsiegelbare und peelfähige Deckschicht (A) enthält Polyester auf Basis von aromatischen und aliphatischen Säuren und aliphatischen Diolen. Des Weiteren enthält die Deckschicht (A) Partikel in einer bestimmten Konzentration und Größe. Die Erfindung betrifft weiterhin ein Verfahren zur Herstellung der Folie und ihre Verwendung.

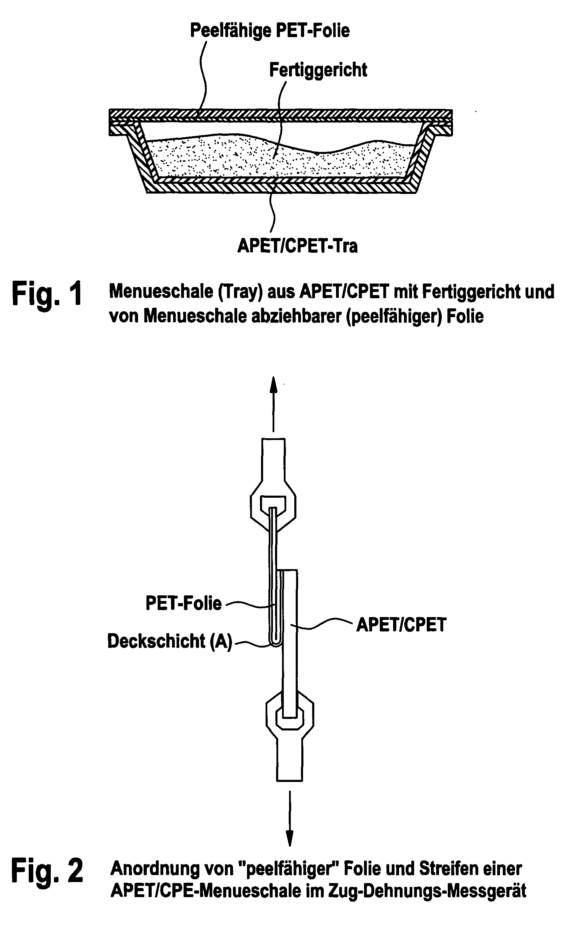

Für Fertiggerichte (engl. ready-prepared meals) sind in Europa die Zuwachsraten derzeit zweistellig. Die Fertiggerichte werden nach ihrer Zubereitung in Menüschalen (engl. trays) eingefüllt (vgl. Figur 1). Auf den Rand der Menüschale wird eine Folie heißgesiegelt, die die Verpackung verschließt und das Fertiggericht gegen äußere Einflüsse schützt. Die Fertiggerichte sind z. B. für die Erhitzung in der Mikrowelle, für die Erhitzung im Backofen oder für die Erhitzung in der Mikrowelle und im Backofen geeignet. Im letztgenannten Fall muss das Fertiggericht und die Verpackung "dual ovenable" (= Mikrowellen- und Backofen fähig) sein. Auf Grund der im Backofen vorherrschenden Temperaturen (bis 220°C) werden an das Verpackungsmaterial (Menüschale und Deckelfolie) besonders hohe Anforderungen gestellt.

Sowohl für die Menüschale als auch für die Deckelfolie kommen für "dual ovenable"-Anwendungen nur ausgewählte Materialien in Frage. Typische Materialien für die Menüschalen sind in diesem Fall CPET, Aluminium, mit PET oder mit PET-Folie beschichteter Karton oder Schalen aus APET/CPET. Menüschalen aus APET/CPET (vgl. Figur 1) bestehen außen aus einer CPET-Schicht und innen aus einer APET-Schicht. Die dicke kristalline und meist pigmentierte, d. h. mit Partikeln gefüllte CPET-Schicht liefert die Stabilität der Schale, auch bei den vergleichsweise hohen Temperaturen im Backofen. Das amorphe PET verbessert dagegen im Wesentlichen die Haftung der Folie auf der Menüschale.

Bei "dual ovenable"-Anwendungen wird für die Deckelfolie in der Regel PET verwendet, das selbst bei 220 °C formstabil und fest genug ist. Materialien wie PP oder PE scheiden hier wegen ihrer niedrigen Schmelzpunkte von vornherein aus. Die Anforderungen an die Deckelfolie werden am besten von biaxial orientierter Polyesterfolie erfüllt.

Bei der Zubereitung des Fertiggerichtes im Ofen wird die Polyesterfolie kurz vor der Erhitzung oder kurz nach der Erhitzung von der Menüschale mit der Hand abgezogen. Hierbei darf die Polyesterfolie auf keinen Fall ein- bzw. ein- und weiterreißen. Das Abziehen der Folie von der Menüschale, ohne dass dabei die Folie ein- oder weiterreißt, wird in der Lebensmittelbranche auch mit "Peelen" bezeichnet. Für diese Anwendung muss die Polyesterfolie daher nicht nur heißsiegelbar, sondern insbesondere auch peelfähig sein. Bei vorgegebenem Material und vorgegebener Gesamtdicke der Folie wird die Peelfähigkeit der Folie hauptsächlich von den Eigenschaften der Oberflächenschicht der Folie, die auf der Menüschale gesiegelt ist, bestimmt.

Die Peelfähigkeit von Folien lässt sich labormäßig relativ einfach mit einem Spannungs-Dehnungstester (z. B. Zwick) feststellen (vgl. Figur 2). Für diesen Test werden zunächst aus der Polyesterfolie und der Menüschale zwei 15 mm breite und ca. 50 mm lange Streifen ausgeschnitten und gegeneinander gesiegelt. Die gesiegelten Streifen werden - wie in der Figur dargestellt - in die Kluppen des Testers eingespannt. Der "Winkel" zwischen der in der oberen Kluppe eingespannten Folie und dem Menüschalenstreifen beträgt 180°. Bei diesem Test werden die Kluppen des Testers mit einer Geschwindigkeit von 200 mm/min auseinander gefahren, wobei die Folie im günstigsten Fall von der Menüschale vollständig abgeschält wird (in Anlehnung an ASTM-D 3330).

Bei diesem Test ist im Wesentlichen zwischen zwei unterschiedlichen Mechanismen zu unterscheiden.

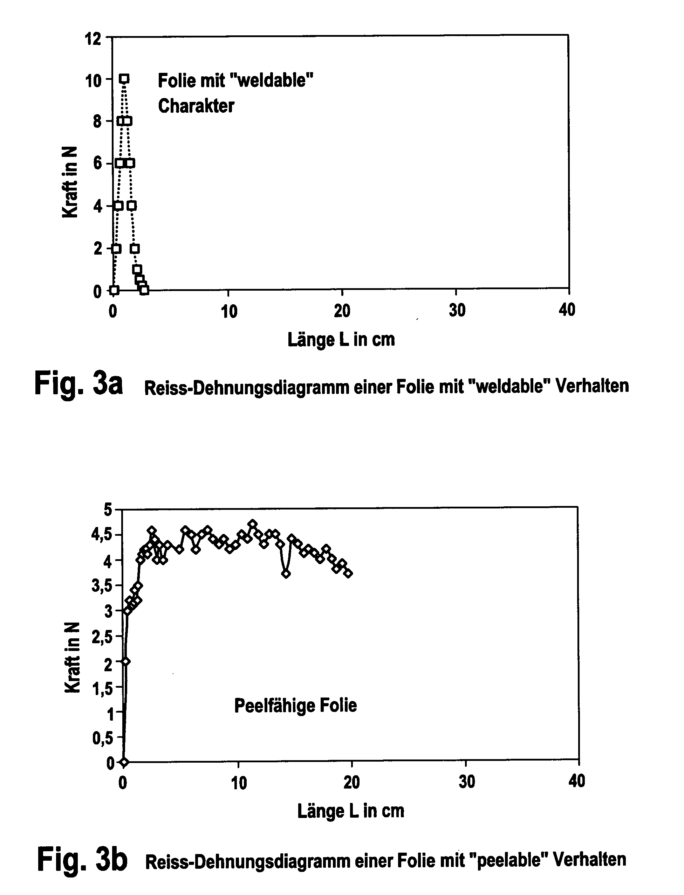

Im ersten Fall steigt beim Ziehvorgang die Zugkraft schnell bis zu einem Maximum an (vgl. Figur 3a) und fällt danach direkt wieder auf Null zurück. Beim Erreichen der Maximalkraft reißt die Folie ein oder vor dem Delaminieren von der Menüschale ab, wodurch die Kraft sofort wieder auf Null zurückgeht. Die Folie ist in diesem Fall nicht peelfähig, da sie zerstört wird. Das Verhalten der Folie lässt sich eher als eine Art "Verschweißen" (engl. weldable) mit der Menüschale beschreiben. Die Zerstörung der Folie beim Abziehen von der Menüschale ist unerwünscht, weil damit das saubere und leichte Öffnen der Verpackung (engl. easy opening) ohne Werkzeuge wie Schere oder Messer erschwert wird.

Eine peelfähige Folie wird dagegen erhalten, wenn die Zug- oder die Schälkraft bis zu einem bestimmten Wert (bzw. bis zu einem bestimmten Plateau) ansteigt und dann über die Strecke, über die die beiden Streifen miteinander gesiegelt sind, in etwa konstant bleibt (vgl. Figur 3b). In diesem Fall reißt die Folie nicht ein, sondern lässt sich wie gewünscht von der Menüschale mit geringem Kraftaufwand abschälen (engl. peelen).

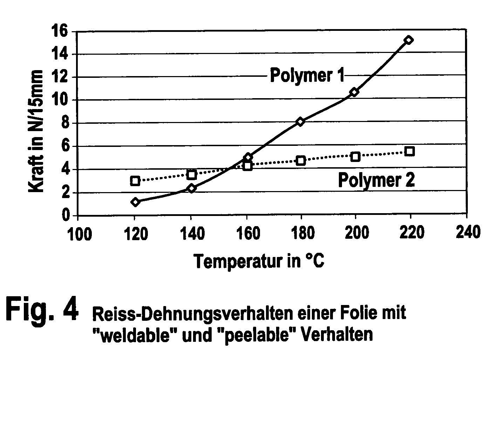

Die Höhe der Peelkraft wird in erster Linie von den in der Siegelschicht (A) verwendeten Polymeren bestimmt (vgl. Figur 4, Polymer 1 und Polymer 2). Daneben ist die Höhe der Peelkraft insbesondere abhängig von der angewandten Heißsiegeltemperatur. Die Peelkraft steigt in der Regel mit der Heißsiegeltemperatur an. Mit zunehmender Heißsiegeltemperatur wächst dabei die Gefahr, dass die Siegelschicht ihre Peelfähigkeit verliert. D. h. eine Folie, die bei Anwendung einer geringen Heißsiegeltemperatur peelfähig ist, verliert diese Eigenschaft, wenn eine genügend hohe Heißsiegeltemperatur angewendet wird. Dieses Verhalten ist insbesondere bei Polymeren zu erwarten, die die in Figur 4 für Polymer 1 gezeigte Charakteristik aufzeigen. Diesem tendenziell allgemeingültigen aber für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 4). In der Praxis beträgt dieser Temperaturbereich im Allgemeinen 150 bis 220 °C, bevorzugt 150 bis 200 °C und besonders bevorzugt 150 bis 190 °C.

Die heißsiegelbare und peelfähige Schicht wird nach dem Stand der Technik in der Regel mittels sogenannter off-line-Methoden (d. h. in einem zusätzlichen, der Folienherstellung nachgeordneten Prozessschritt) auf die Polyesterfolie aufgebracht. Bei dieser Methode wird zunächst eine "Standardpolyesterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie appliziert. In einem nachgeschalteten Trockenofen wird das Lösungsmittel verdunstet, und das peelfähige Polymer bleibt als feste Schicht auf der Folie zurück.

Solch ein off-line-Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte peelfähige heißsiegelbare Polyesterfolien angeboten. Die Polyesterfolien unterscheiden sich im Aufbau und in der Zusammensetzung der Deckschicht (A). Sie gelangen entsprechend ihrer (Peel)-Eigenschaften in unterschiedliche Anwendungen. Es ist z. B. üblich, die Folien von Seiten der Anwendung in Folien mit leichter Peelbarkeit (easy peel), mit fester Peelbarkeit (medium peel) und mit starker, widerstandsfähiger Peelbarkeit (strong peel) zu unterteilen. Wesentliches quantifizierbares Unterscheidungsmerkmal zwischen diesen Folien ist die Höhe der jeweiligen Peelkraft entsprechend der Figur 3b. Eine Einteilung wird an dieser Stelle wie folgt vorgenommen:

| Leichte Peelbarkeit (easy peel) | Peelkraft im Bereich von ungefähr 1 bis 4 N je 15 mm Streifenbreite |
|---|---|
| Feste Peelbarkeit (medium peel) | Peelkraft im Bereich von ungefähr 3 bis 8 N je 15 mm Streifenbreite |
| Starke, widerstandsfähige Peelbarkeit (strong peel) | Peelkraft im Bereich von mehr als 5 N je 15 mm Streifenbreite |

Einige siegelbare PET-Folien sind bereits bekannt.

In der EP-A-0 035 835 wird eine koextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Das Polymer der Versiegelungsfolienschicht ist im Wesentlichen ein Polyestercopolymer, das auf Basis von aromatischen Dicarbonsäuren sowie aliphatischen Diolen aufgebaut ist. Durch die teilchenförmigen Zusatzstoffe werden Oberflächenvorsprünge gebildet, die ein unerwünschtes Blocken und Kleben der Folie an Walzen oder Führungen verhindern. Durch Wahl von Partikeln mit größerem Durchmesser als die Siegelschicht wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (entsprechend 0,97 bis 1,8 N/15 mm Folienbreite). Über das Peelverhalten der Folie gegen Menüschalen aus APET, CPET und APET/CPET finden sich in der Schrift keine Hinweise.

In der EP-A 0 379 190 wird eine coextrudierte, biaxial orientierte Polyesterfolie beschrieben, die eine Trägerfolienschicht aus Polyester und mindestens eine Versiegelungsfolienschicht aus einer Polyester-Zusammensetzung umfasst. Die Versiegelungsfolienschicht kann aliphatische und aromatische Dicarbonsäuren sowie aliphatische Diole enthalten. Das Polymer für die Versiegelungsfolienschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= fin-Siegelung), beträgt mehr als 400 $g_{force}$ • cm/15 mm (mehr als 4 N • cm/1 5 mm), wobei die Versiegelungsfolienschicht anorganische und/oder organische feine Teilchen enthalten kann, die im Polyester nicht löslich sind und wobei die feinen Teilchen in einer Menge von 0,1 bis 5 Gew.-% vorhanden sind, bezogen auf das Gesamtgewicht der Versiegelungsfolienschicht. In den Beispielen der EP-A 0 379 190 werden organische Partikel - sofern sie überhaupt eingesetzt werden - in Mengen von maximal 0.3 Gew.-% eingesetzt. Die Folie zeichnet sich zwar durch gute Peeleigenschaften (mit Plateau-Charakter im Peeldiagramm [s. o.]) gegen sich selbst aus (d. h. Versiegelungsfolienschicht gegen Versiegelungsfolienschicht), über das Peelverhalten gegen Menüschalen aus APET, CPET und APET/CPET finden sich dort jedoch keine Hinweise. Insbesondere aber ist die Folie gemäß dieser Erfindung verbesserungswürdig in ihrer Herstell- und ihrer Verarbeitbarkeit (die Rohstoffe neigen zum Kleben).

In der WO-A- 96/19333 wird ein Verfahren zur Herstellung peelfähiger Folien beschrieben, bei dem die heißsiegelbare, peelfähige Schicht in-line auf die Polyesterfolie aufgebracht wird. Bei dem Verfahren werden vergleichsweise geringe Mengen von organischen Lösungsmitteln verwendet. Die heißsiegelbare, peelfähige Schicht enthält einen Copolyester, bei dem a) 40 bis 90 Mol-% einer aromatischen Dicarbonsäure, b) 10 bis 60 Mol-% einer aliphatischen Dicarbonsäure, c) 0,1 bis 10 Mol-% einer Dicarbonsäure enthaltend eine freie Säuregruppe oder ein Salz davon, d) 40 bis 90 Mol-% eines Glykols enthaltend 2 bis 12 Kohlenstoffatome und e) 10 bis 60 Mol-% eines Polyalkyldiols zur Bildung des Copolyesters verwendet wurden. Die Beschichtung wird aus einer wässrigen Dispersion oder einer Lösung, die bis zu 10 Gew.-% organisches Lösungsmittel enthält, an die Folie angetragen. Das Verfahren ist hinsichtlich derverwendbaren Polymere und der erzielbaren Schichtdicken für die heißsiegelbare, peelfähige Schicht eingeschränkt. Die maximal erreichbare Schichtdicke wird mit 0,5 μm angegeben. Die maximale Siegelnahtfestigkeit ist gering, sie beträgt 500 bis 600 g/25 mm$^2$ bzw. [(500 bis 600)/170] N/15 mm Folienbreite.

In der WO 02/059186 A1 wird ein Verfahren zur Herstellung peelfähiger Folien beschrieben, bei dem die heißsiegelbare, peelfähige Schicht ebenfalls in-line auf die Polyesterfolie aufgebracht wird. Angewendet wird in diesem Fall die sogenannte Schmelz-Beschichtung (melt-coating), wobei vorzugsweise die längsgestreckte Folie mit dem heißsiegelbaren, peelfähigen Polymer beschichtet wird. Das heißsiegelbare, peelfähige Polymer enthält Polyester auf Basis von aromatischen und aliphatischen Säuren sowie auf Basis von aliphatischen Diolen. Die in den Beispielen offenbarten Copolymere haben Glasübergangstemperaturen von unter -10 °C; solche Copolyester sind zu weich, weshalb sie sich nicht in üblichen Walzenstreckverfahren orientieren lassen (Kleben an den Walzen). Die Dicke der heißsiegelbaren, peelfähigen Schicht beträgt weniger als 8 μm. In der WO 02/059186 A1 wird die an sich bekannte Schmelz-Beschichtung von der an sich bekannten Extrusions-Beschichtung technisch und über die Viskosität der Schmelze abgegrenzt. Nachteilig an dem Verfahren ist, dass nur vergleichsweise dünnflüssige Polymere (max. 50 Pa*sec) mit niedrigem Molekulargewicht verwendet werden können. Daraus resultieren nachteilige Peel-Eigenschaften der Folie. Außerdem ist bei diesem Verfahren die Beschichtungsgeschwindigkeit limitiert, wodurch der Herstellungsprozess unwirtschaftlich wird. Qualitätsmäßig zeigen sich Mängel bei der Optik der Folie, die z. B. als Beschichtungsstreifen sichtbar werden. Auch ist es bei diesem Verfahren schwierig, eine über die Bahnbreite der Folie gleichmäßige Dicke der Siegelschicht zu erhalten, was wiederum zu einer ungleichmäßigen Peelcharakteristik führt.

Aufgabe der vorliegenden Erfindung war es, eine coextrudierte, heißsiegelbare und peelfähige, biaxial orientierte Polyesterfolie zur Verfügung zu stellen, die sich durch hervorragende Peeleigenschaften gegenüber Menüschalen auszeichnet, insbesondere gegenüber der APET-Seite von Menüschalen aus APET/CPET. Sie soll die Nachteile der Folien nach dem Stand der Technik nicht mehr aufweisen und sich insbesondere dadurch auszeichnen, dass

- sie gegenüber der APET-Seite von Menüschalen aus APET/CPET eine leichte Peelbarkeit (easy peel) zeigt; die Peelkraft soll im Bereich von 1 bis 4 N je 15 mm, bevorzugt im Bereich von 1,5 bis 4 N je 15 mm und besonders bevorzugt im Bereich von 2,0 bis 4 N je 15 mm Folienstreifenbreite liegen;
- in der heißsiegelbaren und peelfähigen Schicht keine organischen Lösemittelrückstände enthalten sind;
- die heißsiegelbare und peelfähige Schicht gegenüber der APET-Seite von APET/CPET-Menüschalen eine Mindestsiegeltemperatur von 150 °C, bevorzugt 145 °C, insbesondere 140 °C, aufweist und wobei die max. Siegeltemperatur im Allgemeinen 220 °C, bevorzugt 200 °C und besonders bevorzugt 190 °C beträgt;
- bei ihrer Herstellung Verfahren angewendet werden, bei denen von vornherein keine organischen Lösemittel verwendet werden;
- sich die Folie wirtschaftlich herstellen lässt, dies bedeutet beispielsweise auch, dass zur Herstellung der Folie in der Industrie übliche Streckverfahren eingesetzt werden können; weiterhin sollte die Folie bei heute üblichen Maschinengeschwindigkeiten bis zu 500 m/min herstellbar sein;
- eine gute Haftung (größer als 2 N/15 mm Folienbreite) zwischen den einzelnen Schichten der Folie für deren praktische Anwendung gewährleistet ist;
- die optischen Eigenschaften der Folie gut sind, dies bedeutet beispielsweise eine niedrige Trübung (kleiner als 20 %) und ein hoher Glanz (größer als 70 für die siegelfähige Seite und >100 für die der siegelfähigen gegenüberliegenden Seite, jeweils bei 20°-Einstrahlwinkel) der Folie;
- bei der Herstellung der Folie gewährleistet ist, dass das Regenerat in einer Menge von bis zu 60 Gew.-% wieder der Extrusion zugeführt werden kann, ohne dass dabei die physikalischen (die Reißfestigkeit der Folie in beiden Richtungen sollte nicht um mehr als 10 % abnehmen), insbesondere aber die optischen Eigenschaften der Folie nennenswert negativ beeinflusst werden.

Außerdem soll dafür Sorge getragen werden, dass die Folie auf schnelllaufenden Maschinen verarbeitet werden kann. Andererseits sollten sich gleichzeitig die bekannten, Polyesterfolien auszeichnenden Eigenschaften nicht verschlechtern. Hierzu gehören beispielsweise die mechanischen (der E-Modul der biaxial gestreckten Folien sollte in beiden Orientierungsrichtungen größer als 3000 N/mm$^2$, bevorzugt größer als 3500 N/mm$^2$ und besonders bevorzugt größer als 4000 N/mm$^2$sein) und die thermischen Eigenschaften (der Schrumpf der biaxial gestreckten Folien sollte in beiden Orientierungsrichtungen nicht größer als 3 %, bevorzugt nicht größer als 2,8 % und besonders bevorzugt nicht größer als 2,5 % sein), das Wickelverhalten und die Verarbeitbarkeit der Folie, insbesondere bei der Bedruckung, Kaschierung oder bei der Beschichtung der Folie mit metallischen oder keramischen Materialien.

Unter heißsiegelbar wird hier die Eigenschaft einer coextrudierten Polyesterfolie verstanden, die zumindest eine Schicht (= heißsiegelbare Deckschicht) enthält, die mittels Siegelbacken durch Anwendung von Wärme (140 bis 220 °C) und Druck (2 bis 5 bar) in einer bestimmten Zeit (0,2 bis 2 sec) mit sich selbst (Fin-Siegelung) bzw. mit einem Substrat aus thermoplastischem Kunststoff (= Lab-Siegelung, hier insbesondere die APET-Seite von APET/CPET-Menüschalen) verbunden werden kann, ohne dass dabei die Trägerschicht (= Basisschicht) selbst plastisch wird. Um dies zu bewerkstelligen, besitzt das Polymer der Siegelschicht im Allgemeinen einen deutlich niedrigen Schmelzpunkt als das Polymer der Basisschicht. Wird als Polymer für die Basisschicht beispielsweise Polyethylenterephthalat mit einem Schmelzpunkt von 254 °C verwendet, so beträgt der Schmelzpunkt der heißsiegelbaren Schicht im Allgemeinen weniger als 230 °C, im vorliegenden Fall bevorzugt weniger als 210 °C und besonders bevorzugt weniger als 190 °C.

Unter peelfähig wird hier die Eigenschaft einer coextrudierten Polyesterfolie verstanden, die zumindest eine Schicht (= heißsiegelbare und peelfähige Deckschicht) enthält, die nach der Heißsiegelung auf ein Substrat (hier im Wesentlichen die APET-Seite einer APET/CPET-Schale) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen des Substrates heißgesiegelten Folie in einem Zug-Dehnungs-Prüfgerät unter einem Schälwinkel von 180° entsprechend Figur 2 wird ein Reiß-Dehnverhalten der Folie gemäß Figur 3b erhalten. Bei Beginn des Abschälens der Folie von dem Substrat steigt die dazu erforderliche Kraft gemäß Figur 3b bis zu einem bestimmten Wert (z. B. 3 N/15 mm) an und bleibt dann über den gesamtem Schälweg in etwa konstant, ist allerdings mit mehr oder weiniger großen Schwankungen behaftet (ca. +/- 20 %).

Gelöst wird die Aufgabe durch die Bereitstellung einercoextrudierten, transparenten, biaxial orientierten Polyesterfolie, enthaltend eine Basisschicht (B) und eine heißsiegelbare und zumindest gegenüber APET peelfähige Deckschicht (A), wobei die heißsiegelbare und peelfähige Deckschicht (A) aus

a) 80-98 Gew.-% Polyester und
b) 2-10 Gew.-% anorganischen und/oder organischen Partikeln mit einem mittleren Durchmesser $d_{50}$ von 2,0 bis 8,0 µm (bezogen auf die Masse der Deckschicht (A)) besteht, wobei
c) der Polyester aus 30-95 Mol-% an Einheiten aufgebaut ist, die auf mindestens eine aromatische Dicarbonsäure, und 5-70 Mol-% an Einheiten, die auf mindestens eine aliphatische Dicarbonsäure zurückgehen,
d) das Verhältnis aus Teilchengröße $d_{50}$ und Schichtdicke $d_A$ der Deckschicht (A) größer als 1,3 ist und
e) die Schichtdicke der Deckschicht (A) $d_A$ 0,5 bis 2,5 µm beträgt.

Das Material der Deckschicht (A) besteht also überwiegend aus einem Polyester und anorganischen und/oder organischen Partikeln. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von 30-95 Mol-%, bevorzugt 50-90 Mol-%, besonders bevorzugt 60-88 Mol-% enthalten. Die auf die aliphatischen Dicarbonsäuren zurückgehenden Einheiten sind in dem Polyester in einer Menge von 5-70 Mol-%, bevorzugt 10-50 Mol-%, besonders bevorzugt 12-40 Mol-%, enthalten, wobei die Mol-% -Angaben sich immer zu 100 % ergänzen. Die hierzu korrespondierenden Dioleinheiten ergeben ebenfalls immer 100 Mol-%.

Bevorzugte aliphatische Dicarbonsäuren sind Pimelinsäure, Korksäure, Azelainsäure, Sebazinsäure, Glutarsäure und Adipinsäure. Insbesonders bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure.

Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

- 30 bis 95 Mol-%, bevorzugt 45 bis 85 Mol-% und besonders bevorzugt 50 bis 78 Mol-% Terephthalat,
- 0 bis 25 Mol-%, bevorzugt 5 bis 20 Mol-% und besonders bevorzugt 10 bis 20 Mol-% Isophthalat,
- 5 bis 70 Mol -%, bevorzugt 8 bis 50 Mol-% und besonders bevorzugt 11 bis 35 Mol-% Azelat,
- 0 bis 50 Mol-%, bevorzugt 0 bis 40 Mol-% und besonders bevorzugt 0 bis 30 Mol-% Sebazat,
- 0 bis 50 Mol-%, bevorzugt 0 bis 40 Mol-% und besonders bevorzugt 0 bis 30 Mol-% Adipat,
- mehr als 30 Mol -%, bevorzugt mehr als 40 Mol-% und besonders bevorzugt mehr als 50 Mol-% Ethylen oder Butylen.

Bis zu 10 Gew.-% des Materials der Deckschicht (A) besteht aus Additiven, Hilfsmitteln und/oder sonstigen in der Polyesterfolientechnologie üblicherweise verwendeten Zusatzstoffen.

Es hat sich als zweckmäßig erwiesen, den Hauptpolyester der Deckschicht (A) aus zwei getrennten Polyestern I und II herzustellen, die dem Extruder für diese Schicht als Mischung zugeführt werden.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber der APET-Seite von APET/CPET-Menüschalen von nicht mehr als 150 °C, bevorzugt nicht mehr als 145 °C und besonders bevorzugt nicht mehr als 140 °C und eine Siegelnahtfestigkeit gegenüber der APET-Seite von APET/CPET Menüschalen von mindestens 1 N, bevorzugt mindestens 1,5 N, besonders bevorzugt mindestens 2 N (immer bezogen auf 15 mm Folienbreite). Die heißsiegelbare und peelfähige Deckschicht (A) hat gegenüber der APET-Seite von APET/CPET-Menüschalen eine max. Siegeltemperatur von im Allgemeinen 220 °C, bevorzugt 200 °C und besonders bevorzugt 190 °C, wobei im gesamten Siegelbereich eine gegenüber der APET-Seite von APET/CPET-Menüschalen peelfähige Folie erhalten wird. D. h. mit dieser Folie wird beim 180°-Zugversuch gemäß Figur 2 eine Kurve gemäß Figur 3b erhalten.

Die Folie nach der vorliegenden Erfindung enthält eine Basisschicht (B) und mindestens eine erfindungsgemäße Deckschicht (A). In diesem Fall ist die Folie zweischichtig aufgebaut. In einer bevorzugten Ausführungsform ist die Folie drei- oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C). Bei einer vierschichtigen Ausführungsform enthält die Folie eine Zwischenschicht (D) zwischen der Basisschicht (B) und der Deckschicht (A) oder (C).

Die Basisschicht der Folie besteht zu mindestens zu 80 Gew.-% aus thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden. (Bei der Angabe der Mengen für die Dicarbonsäuren bildet die Gesamtmenge aller Dicarbonsäuren 100 Mol-%. Analog bildet die Gesamtmenge aller Diole auch 100 Mol-%.)

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$ $C_{19}$)-Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol), oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Besonders vorteilhaft ist es, wenn in der Basisschicht (B) ein Polyester-Copolymer auf Basis von Terephthalat und geringen Mengen (< 5 Mol-%) Isophthalsäure oder auf Basis von Terephthalat und geringen Mengen (< 5 Mol-%) Naphthalin-2,6-dicarbonsäure verwendet wird. In diesem Fall sind die Herstellbarkeit der Folie und die optischen Eigenschaften der Folie besonders gut. Die Basisschicht (B) enthält dann im Wesentlichen ein Polyestercopolymeres, das überwiegend aus Terephthalsäure- und Isophthalsäure-Einheiten und/oderTerephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann nach dem Umesterungsverfahren erfolgen. Dabei geht man von Dicarbonsäureestern und Diolen aus, die mit den üblichen Umesterungskatalysatoren wie Zink-, Calcium-, Lithium- und Mangan-Salzen umgesetzt werden. Die Zwischenprodukte werden dann in Gegenwart allgemein üblicher Polykondensationskatalysatoren wie Antimontrioxid, Titanoxide oder Ester sowie Germanium-Verbindungen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie nach der vorliegenden Erfindung ist zumindest zweischichtig aufgebaut. Sie besteht dann aus der Basisschicht (B) und der auf dieser durch Coextrusion aufgebrachten erfindungsgemäßen siegelbaren und peelfähigen Deckschicht (A).

Die durch Coextrusion auf die Basisschicht (B) aufgebrachte siegelbare und peelfähige Deckschicht (A) ist überwiegend, d. h. zu mindestens ca. 80 Gew.-% aus Polyestern aufgebaut.

Erfindungsgemäß enthält die heißsiegelbare und peelfähige Deckschicht (A) Polyester auf Basis von aromatischen und aliphatischen Säuren und bevorzugt aliphatischen Diolen.

Unter den Polyestern werden in der bevorzugten Ausführungsform Copolyester oder Mischungen aus Homo- und Copolyester oder Mischungen aus verschiedenen Copolyestern verstanden, die auf Basis von aromatischen und aliphatischen Dicarbonsäuren und aliphatischen Diolen aufgebaut sind.

Beispiele für die erfindungsgemäß einsetzbaren aromatischen Dicarbonsäuren sind die Terephthalsäure, die Isophthalsäure, die Phthalsäure und die 2,6-Naphthalindicarbonsäure.

Beispiele für die erfindungsgemäß einsetzbaren aliphatischen Dicarbonsäuren sind die Bernsteinsäure, die Glutarsäure, die Adipinsäure, die Pimelinsäure, die Korksäure, die Azelainsäure und die Sebazinsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol.

Der Polyester für die Deckschicht (A) wird bevorzugt aus zwei Polyestern I und II hergestellt.

Der Anteil des Polyesters I, der aus einem oder mehreren aromatischen Dicarboxylaten und einem oder mehreren aliphatischen Alkylenen besteht, in der Deckschicht (A) beträgt 20 bis 80 Gew.-%. In der bevorzugten Ausführungsform beträgt der Anteil des Polyesters I 25 bis 75 Gew.-% und in der besonders bevorzugten Ausführungsform beträgt er 30 bis 70 Gew.-%.

Im Allgemeinen basiert der Polyester I der erfindungsgemäßen Deckschicht (A) auf den folgenden Dicarboxylaten und Alkylenen, jeweils bezogen auf die Gesamtdicarboxylat- bzw. Gesamtalkylenmenge:

- 70 bis 100 Mol-%, bevorzugt 72 bis 95 Mol-% und besonders bevorzugt 74 bis 93 Mol-% Terephthalat,
- 0 bis 30 Mol-%, bevorzugt 5 bis 28 Mol-% und besonders bevorzugt 7 bis 26 Mol-% Isophthalat,
- mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie bereits zuvor für die Basisschicht (B) als Haupt- und Nebencarbonsäuren aufgelistet worden sind.

Ganz besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D. h. es handelt sich um Polyethylenterephthalat/isophthalat.

In einerweiteren bevorzugten Ausführungsform besteht der Polyester aus einer Mischung, welche einen Copolyester, aufgebaut aus Terephthalat-, Isophthalat- und aus EthylenEinheiten, und ein aromatisches Polyesterhomopolymeres, z. B. ein Polybutylenterephthalat enthält.

Es wurde gefunden, dass für den Fall, wo der Anteil an Polyester I in der Deckschicht (A) weniger als 20 Gew.-% beträgt, die Herstellbarkeit der Folie über die Coextrusionstechnologie deutlich erschwert bzw. nicht mehr gewährleistet ist. Die Tendenz der Folie, an bestimmten Maschinenteilen zu kleben, insbesondere an mitlaufenden, metallischen Walzen in der Längsstreckung und nach der Querstreckung, ist hier besonders hoch. Beträgt demgegenüber andererseits der Anteil an Polyester I in der Deckschicht (A) mehr als 80 Gew.-%, so wird das Peelverhalten der Folie stark beeinträchtigt. Das Siegelverhalten der Folie ändert sich in diesem Fall von "peelable" zu "weldable".

Entsprechend der vorliegenden Erfindung beträgt der Anteil von Polyester II in der Deckschicht (A) 20 bis 75 Gew.-%. In der bevorzugten Ausführungsform beträgt der Anteil von Polyester II 25 bis 70 Gew.-% und in der besonders bevorzugten Ausführungsform beträgt er 30 bis 65 Gew.-%.

Bevorzugt besteht der Polyester II aus einem Copolymeren aus aliphatischen und aromatischen Säurekomponenten, bei welchem die aliphatischen Säurekomponenten 20 bis 90 Mol-%, bevorzugt 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, bevorzugt der Terephthalsäure und/oder der Isophthalsäure, sowie auf der glykolischen Seite von aliphatischen oder cycloaliphatischen oder aromatischen Diolen, wie sie bereits oben bezüglich der Basisschicht ausführlich beschrieben wurden.

Im Allgemeinen basiert der Polyester II der erfindungsgemäßen Deckschicht (A) zumindest auf den folgenden Dicarboxylaten und Alkylenen, jeweils bezogen auf die Gesamtdicarboxylat- bzw. Gesamtalkylenmenge:

- 20 bis 65 Mol -%, bevorzugt 30 bis 70 Mol-% und besonders bevorzugt 35 bis 60 Mol-% Azelat,
- 0 bis 50 Mol-%, bevorzugt 0 bis 45 Mol-% und besonders bevorzugt 0 bis 40 Mol-% Sebazat,
- 0 bis 50 Mol-%, bevorzugt 0 bis 45 Mol-% und besonders bevorzugt 0 bis 40 Mol-% Adipat,
- 10 bis 80 Mol-%, bevorzugt 20 bis 70 Mol-% und besonders bevorzugt 30 bis 60 Mol-% Terephthalat,
- 0 bis 30 Mol-%, bevorzugt 3 bis 25 Mol-% und besonders bevorzugt 5 bis 20 Mol-% Isophthalat,
- mehr als 30 Mol -%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie bereits zuvor für die Basisschicht (B) als Haupt- und Nebencarbonsäuren aufgelistet worden sind, oder auch von Hydroxycarbonsäuren wie Hydroxybenzoesäure o. ä..

Durch das Vorhandensein von mindestens 10 Mol-% aromatischer Dicarbonsäure wird gewährleistet, dass das Polymer II ohne Verklebungen z. B. im Coextruder oder in der Längsstreckung verarbeitbar ist.

Beträgt der Anteil an Polyester II in der Deckschicht (A) weniger als 20 Gew.-%, so wird das Peelverhalten der Folie stark beeinträchtigt. Das Siegelverhalten der Folie ändert sich in diesem Fall von "peelable" zu "weldable". Beträgt demgegenüber andererseits der Anteil an Polyester II in der Deckschicht (A) mehr als 75 Gew.-%, so wird die Herstellbarkeit der Folie über die Coextrusionstechnologie erschwert bzw. nicht mehr gewährleistet. Die Tendenz der Folie, an bestimmten Maschinenteilen zu kleben, insbesondere an mitlaufenden, metallischen Walzen in der Längsstreckung und nach der Querstreckung, ist hier besonders hoch.

Bevorzugt enthält die Deckschicht (A) eine Mischung aus den Polyestern I und II. Gegenüber der Verwendung von nur einem Polyester mit vergleichbaren Komponenten und vergleichbaren Anteilen der Komponenten weist eine Mischung die folgenden Vorteile auf:

- Die Mischung der beiden Polyester I und II ist von den jeweiligen Glasübergangstemperaturen ($T_g$s) gesehen leichter zu verarbeiten (zu extrudieren). Wie Untersuchungen gezeigt haben, neigt die Mischung aus einem Polymeren mit einem hohen $T_g$ (Polyester I) und einem Polymeren mit einem niedrigen $T_g$ (Polyester II) weniger zum Verkleben im Coextruder als ein einziges Polymer mit einem entsprechend gemischten $T_g$.
- Die Polymerherstellung ist einfacher, weil man in der Regel nicht beliebig viel Dosierstationen für die Ausgangsstoffe zur Verfügung hat.
- Außerdem können mit der Mischung praktisch gesehen die gewünschten Peeleigenschaften individueller eingestellt werden als bei Einsatz eines einzigen Polyesters.
- Auch die Zugabe von Partikeln (siehe unten) gestaltet sich bei Polyester I einfacher als bei Polyester II.

Zweckmäßigerweise beträgt die Glasübergangstemperaturvon Polyester I mehrals 50 °C. Bevorzugt beträgt die Glasübergangstemperatur von Polyester I mehrals 55 °C und besonders bevorzugt mehr als 60 °C. Ist die Glasübergangstemperatur von Polyester I kleiner als 50 °C, kann die Folie nicht verfahrenssicher hergestellt werden. Die Klebeneigung der Deckschicht (A) z. B. gegenüber Walzen ist dabei so groß, dass mit häufigen Folienabrissen, insbesondere in der Längsstreckung, gerechnet werden muss. Die Folie kann sich dabei um die Walzen in der Längsstreckung wickeln, was zu beträchtlichen Schäden an der Maschine führen kann. Bei der Extrusion verklebt ein solcher Polyester leicht an den metallischen Wänden und führt damit zu Verstopfungen.

Zweckmäßigerweise beträgt die Glasübergangstemperatur von Polyester II weniger als 20 °C. Bevorzugt beträgt die Glasübergangstemperatur weniger als 15 °C und besonders bevorzugt weniger als 10 °C. Ist die Glasübergangstemperatur von Polyester II größer als 20 °C, so neigt die Folie beim Abziehen von der Menüschale vermehrt zum Einreißen oder zum Abreißen, was unerwünscht ist.

Erfindungsgemäß enthält die heißsiegelbare und peelfähige Deckschicht (A) anorganische und/oder organische Partikel (auch als "Pigmente" oder "Antiblockmittel" bezeichnet) in einer Konzentration von 2 bis 10 Gew.-%, bezogen auf die Masse der Deckschicht (A). In einer bevorzugten Ausführungsform beträgt der Anteil Partikel 3 bis 9 Gew.-% und in der besonders bevorzugten Ausführungsform beträgt er 4 bis 8 Gew.-%, ebenfalls bezogen auf die Masse der Deckschicht (A).

Enthält die Deckschicht (A) der Folie weniger als 2 Gew.-% Partikel, so ist ein positiver Einfluss auf das Abziehverhalten (Peelverhalten) der Folie von der Menüschale nicht mehr gegeben; die Folie tendiert zum Ein- oder zum Abreißen. Enthält dagegen die Deckschicht (A) der Folie Partikel in einer Konzentration von mehr als 10 Gew.-

%, so wird die Trübung der Folie zu groß.

Es hat sich als vorteilhaft erwiesen, wenn die Partikel in einer bestimmten Größe, in einer bestimmten Verteilung (man spricht dann von einem Partikelsystem) und in einer bestimmten Konzentration vorliegen. Daneben können auch Mischungen von zwei und mehreren verschiedenen Partikelsystemen und/oder Mischungen von Partikelsystemen mit verschiedener chemischer Zusammensetzung der Deckschicht (A) zugegeben werden.

Übliche Partikel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Arcrylat-Partikel. Die Partikel können der Schicht in den jeweils vorteilhaften Konzentrationen z. B. als glykolische Dispersion während der Polykondensation oder über Masterbatche bei der Extrusion zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung wenig geeignet. Zur (synthetischen) Herstellung der $SiO_2$-Partikel (auch Silicagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann es getrocknet und weiterverarbeitet werden. Durch Kontrolle des Waschwasser-pH-Wertes und der Trocknungsbedingungen können die wichtigen physikalischen Parameter, wie z. B. Porenvolumen, Porengröße und die Größe der Oberfläche des anfallenden Silikagels variiert werden. Die gewünschte Partikelgröße (z. B. den $d_{50}$-Wert) und die gewünschte Partikelgrößenverteilung (z. B. die SPAN98) erhält man durch geeignete Mahlung des Silikagels (z. B. mechanisch oder hydromechanisch). Solche Partikel können z. B. über Grace, Fuji, Degussa oder Ineos bezogen werden.

Die Teilchen haben erfindungsgemäß einen mittleren Partikeldurchmesser $d_{50}$ von 2,0 bis 8 μm, bevorzugt von 2,5 bis 7 μm und besonders bevorzugt von 3,0 bis 6 μm. Bei der Verwendung von Teilchen mit einem Durchmesser, der unterhalb 2,0 μm liegt, ist ein positiver Einfluss der Partikel auf das Abziehverhalten der Folie von der Menüschale nicht gegeben. In diesem Fall neigt die Folie beim Abziehen von der Menüschale wiederum zum Ein- oder Weiterreißen, was unerwünscht ist. Teilchen mit einem Durchmesser größer als 8 μm verursachen in der Regel Filterprobleme.

Erfindungsgemäß ist in der heißsiegelbaren und peelfähigen Deckschicht (A) das Verhältnis aus Teilchengröße $d_{50}$ und Schichtdicke $d_A$ der Deckschicht (A) größer als 1,3. Bevorzugt ist das Durchmesser/Schichtdicken-Verhältnis mindestens 1,6 und besonders bevorzugt mindestens 2,0. In diesen Fällen ist ein besonders positiver Einfluss der Partikel auf das Abziehverhalten der Folie von der Menüschale gegeben.

Es hat sich als besonders vorteilhaft erwiesen, in der heißsiegelbaren und peelfähigen Deckschicht (A) Partikel zu verwenden, deren Verteilung für den Partikeldurchmesser eine Streuung aufweist, die durch einen SPAN98 von ≤ 2,0 beschrieben wird (Definition des SPAN98, siehe Messvorschrift). Bevorzugt ist ein SPAN98 von ≤ 1,9, und besonders bevorzugt ist ein SPAN98 von ≤ 1,8. Enthält die Deckschicht (A) der Folie dagegen Partikel, deren SPAN98 größer als 2,0 ist, so werden die optischen Eigenschaften und die Siegeleigenschaften der Folie schlechter.

Weiterhin hat es sich als vorteilhaft erwiesen, die Rauigkeit der heißsiegelbaren und peelfähigen Deckschicht (A) so einzustellen, dass ihr $R_a$-Wert größer als 120 nm ist. Bevorzugt ist die Rauigkeit $R_a$ größer als 140 nm und besonders bevorzugt ist sie größer als 160 nm. Die Obergrenze der Rauigkeit sollte 400 nm, bevorzugt 350 nm, insbesondere 300 nm, nicht überschreiten. Dies kann durch die Auswahl der Partikeldurchmesser, deren Konzentration und die Variation der Schichtdicke gesteuert werden.

Um das Verarbeitungsverhalten der Folie nach der vorliegenden Erfindung weiterhin zu verbessern, ist es von Vorteil, in die Basisschicht (B) bei einem zweischichtigen Folienaufbau (AB) bzw. in die nicht siegelfähige Deckschicht (C) bei einem dreischichtigen Folienaufbau (ABC) ebenfalls Partikel einzuarbeiten, wobei folgende Bedingungen eingehalten werden sollten:

a) Die Partikel sollten einen mittleren Partikeldurchmesser $d_{50}$ (= Median) von 1,5 bis 8 μm aufweisen. Es hat sich dabei als besonders zweckmäßig erwiesen, Teilchen mit einem mittleren Partikeldurchmesser $d_{50}$ von 2,0 bis 5 μm und besonders bevorzugt von 2,5 bis 4 μm zu verwenden.

b) Die Partikel sollten eine Streuung aufweisen, die durch einen SPAN98 von ≤ 2,0 beschrieben wird. Bevorzugt ist der SPAN98 ≤ 1,9 und besonders bevorzugt ist der SPAN98 ≤ 1,8.

c) Die Partikel sollten in einer Konzentration von 0,1 bis 0,5 Gew.-% vorhanden sein. Bevorzugt beträgt die Konzentration der Partikel 0,12 bis 0,4 Gew.-% und besonders bevorzugt 0,15 bis 0,3 Gew.-%.

Zur Erzielung der vorgenannten Eigenschaften, insbesondere der optischen Eigenschaften der siegelbaren und peelfähigen Folie hat es sich insbesondere bei einer dreischichtigen Folie mit ABC-Aufbau als zweckmäßig erwiesen, die Menge an Partikeln in der Basisschicht (B) niedriger einzustellen als in Deckschicht (A). Bei der dreischichtigen Folie vom genannten Typ soll zweckmäßiger Weise in der Basisschicht (B) die Menge der Partikel zwischen 0 und 2,0 Gew.-% liegen, vorzugsweise zwischen 0 und 1,5 Gew.-%, insbesondere zwischen 0 und 1,0 Gew.-%. Als besonders zweckmäßig hat es sich erwiesen, in die Basisschicht nur Partikel einzuarbeiten, wie sie über das arteigene Regenerat (Rezyklat) in die Folie gelangen. Die optischen Eigenschaften der Folie, insbesondere die Trübung der Folie, sind dann besonders gut.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im Allgemeinen größer als 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der zweischichtigen und der besonders vorteilhaften dreischichtigen Ausführungsform der erfindungsgemäßen Folie liegt die Dicke der Deckschicht (A) im Bereich von 0,5 und 2,5 µm, bevorzugt im Bereich von 0,5 und 2,0 µm und besonders bevorzugt im Bereich von 0,5 und 1,5 µm. Beträgt die Dicke der Deckschicht (A) mehr als 2,5 µm, so wächst die Peelkraft deutlich an und liegt nicht mehr im erfindungsgemäßen Bereich. Darüber hinaus wird das Peelverhalten der Folie beeinträchtigt. Beträgt die Dicke der Deckschicht (A) dagegen weniger 0,5 µm, so ist die Folie nicht mehr heißsiegelbar.

Die Dicke der anderen, nicht siegelbaren Deckschicht (C) kann gleich der Deckschicht (A) sein oder von dieser verschieden; ihre Dicke liegt im Allgemeinen zwischen 0,5 und 5 µm.

Die Gesamtdicke der erfindungsgemäßen Polyesterfolie kann innerhalb bestimmter Grenzen variieren. Sie beträgt 3 bis 200 µm, insbesondere 4 bis 150 µm, vorzugsweise 5 bis 100 µm, wobei die Schicht (B) einen Anteil von vorzugsweise 45 bis 97 % an der Gesamtdicke hat.

Die Basisschicht und die anderen Schichten können zusätzlich übliche Additive wie Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt.

Gegenstand der vorliegenden Erfindung ist auch ein Verfahren zur Herstellung der Folie. Zur Herstellung der erfindungsgemäßen heißsiegelbaren und peelfähigen Deckschicht (A) werden zweckmäßiger Weise die jeweiligen Polymere (Polyester I, Polyester II, ggf. weitere Polymere, z. B. Masterbatch(e) für die Partikel) direkt dem Extruderfür die Deckschicht (A) zugeführt. Die Materialien lassen sich bei etwa 200 bis 280 °C extrudieren. Aus verfahrenstechnischer Sicht (Durchmischung der verschiedenen Komponenten) hat es sich dabei als besonders vorteilhaft erwiesen, wenn die Extrusion der Polymere für die Deckschicht (A) mit einem Zweischneckenextruder mit Entgasungsmöglichkeit(en) durchgeführt wird.

Die Polymere für die Basisschicht (B) und für die eventuell vorhandene weitere Deckschicht (C) und gegebenenfalls die Zwischenschicht werden zweckmäßig über weitere Extruder dem (Koextrusions-) System zugeführt. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung der Folie wird im Allgemeinen sequenziell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von 60 bis 130 °C (Aufheiztemperaturen 60 bis 130 °C) und in Querrichtung (transverse direction orientation = TDO) in einem Temperaturbereich von 90 °C (Beginn der Streckung) bis 140 °C (Ende der Streckung) durchgeführt. Das Längsstreckverhältnis liegt im Bereich von 2,0:1 bis 5,5:1, bevorzugt von 2,3:1 bis 5,0:1. Das Querstreckverhältnis liegt allgemein im Bereich von 2,4:1 bis 5,0:1, bevorzugt von 2,6:1 bis 4,5:1.

Der bevorzugte Temperaturbereich, bei der die biaxiale Streckung durchgeführt wird, beträgt bei der Längsstreckung (MDO) 60 bis 120 °C. Die Aufheiztemperaturen der Folie in der Längsstreckung liegen dabei in einem Bereich von 60 bis 115 °C. Bei der Querstreckung (TDO) liegen die Temperaturen der Folie in einem Bereich von 90°C (Beginn der Streckung) bis 140 °C (Ende der Streckung). Das Längsstreckverhältnis liegt bei diesem bevorzugten Temperaturbereich im Bereich von 2,0:1 bis 5,0:1, bevorzugt von 2,3:1 bis 4,8:1. Das Querstreckverhältnis liegt allgemein im Bereich von 2,4:1 bis 5,0:1, bevorzugt von 2,6:1 bis 4,5:1.

Der besonders bevorzugte Temperaturbereich, bei der die biaxiale Streckung durchgeführt wird, beträgt bei der Längsstreckung (MDO) 60 bis 110 °C. Die Aufheiztemperaturen der Folie in der Längsstreckung liegen dabei in einem Bereich von 60 bis 105 °C. Bei der Querstreckung (TDO) liegen die Temperaturen der Folie in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 4,8:1, bevorzugt von 2,3:1 bis 4,6:1. Das Querstreckverhältnis liegt allgemein im Bereich von 2,4:1 bis 5,0:1, bevorzugt von 2,6:1 bis 4,5:1.

Mit den bevorzugten und insbesondere mit den besonders bevorzugten Temperaturen in der MDO wird dem klebrigen Verhalten von Deckschicht (A) auf Walzen (metallische, keramische oder besonders beschichtete Walzenoberflächen) besonders gut Rechnung getragen.

Vor der Querstreckung kann man eine oder beide Oberfläche(n) der Folie nach den an sich bekannten Verfahren In-Line beschichten. Die In-Line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen wie EVOH, PVOH o. ä. erhalten. Vorzugsweise werden solche Schichten dann auf die nicht siegelbare Oberfläche, z. B. die Oberfläche (C), der Folie aufgetragen.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Der Glanz der Folienoberfläche (B) im Falle einer zweischichtigen Folie bzw. der Glanz der Folienoberfläche (C) bei einer dreischichtigen Folie ist größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 110 und in einer besonders bevorzugten Ausführungsform mehr als 120. Diese Folienoberflächen eignen sich daher insbesondere für eine weitere funktionelle Beschichtung, für die Bedruckung oder für die Metallisierung.

Die Trübung der Folie ist kleiner als 20. In einer bevorzugten Ausführungsform beträgt die Trübung der Folie weniger als 16 und in einer besonders bevorzugten Ausführungsform weniger als 12.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Verpacken von Nahrungs- und Genussmitteln, insbesondere zur Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst die wichtigsten erfindungsgemäßen Folieneigenschaften noch einmal zusammen.

Tabelle 1

| Deckschicht (A) | Erfindungs-gemäßer Bereich | Bevorzugt | Besonders bevorzugt | Einheit | Mess-methode |
|---|---|---|---|---|---|
| Anteil Einheiten im erfindungsgemäßen Polyester, aufgebaut aus aromatischen Dicarbonsäuren | 30 bis 95 | 50 bis 90 | 60 bis 88 | Mol.-% | |
| Anteil Einheiten im erfindungsgemäßen Polyester, aufgebaut aus aliphatischen Dicarbonsäuren | 5 bis 70 | 10 bis 50 | 12 bis 40 | Mol.-% | |
| Polyester I | 20 bis 80 | 25 bis 75 | 30 bis 70 | Gew.-% | |
| Polyester II | 20 bis 75 | 25 bis 70 | 30 bis 65 | Gew.-% | |
| Partikelkonzentration | 2,0 bis 10,0 | 3,0 bis 9 | 4 bis 8 | % | |
| Partikeldurchmesser $d_{50}$ | 2,0 bis 8 | 2,5 bis 7 | 3,0 bis 6 | µm | |
| Dicke $d_A$ der Deckschicht A | 0,5 bis 2,5 | 0,5 bis 2,0 | 0,5 bis 1,5 | µm | |
| Partikeldurchmesser/Schichtdicken-Verhältnis | > 1,3 | ≥ 1,6 | ≥ 2,0 | | |
| Rauigkeit $R_a$ | > 120 | > 140 | > 160 | nm | DIN 4768 |
| **Eigenschaften** | | | | | |
| Dicke der Folie | 3 bis 200 | 4 bis 150 | 5 bis 100 | µm | |
| Mindestsiegeltemperatur von DS (A) gegen APET/CPET-Menüschalen | 150 | 145 | 140 | °C | |
| Siegelnahtfestigkeit von DS (A) gegen APET/CPET-Menüschalen | 1,0 bis 4 | 1,5 bis 4 | 2,0 bis 4 | N/15 mm | |
| Glanz der Deckschichten A und C | > 70 und > 100 | > 75 und > 110 | > 80 und > 120 | | DIN 67530 |
| Trübung der Folie | < 20 | < 16 | < 12 | % | ASTM D 1003-52 |

DS: Deckschicht, ≥: größer/gleich

EP 1 475 229 A2

Zur Charakterisierung der Rohstoffe und der Folien wurden im Rahmen der vorliegenden Erfindung die folgenden Messmethoden benutzt:

**Messung des mittleren Durchmessers $d_{50}$**

Die Bestimmung des mittleren Durchmessers $d_{50}$ wurde mittels Laser auf einem Malvern Master Sizer (Malvern Instruments Ltd., UK) mittels Laserscannung durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert (auch Median genannt).

**Messung der SPAN98**

Die Bestimmung des Streumaßes, der SPAN98, wurde mit dem gleichen Messgerät durchgeführt wie oben bei der Bestimmung des mittleren Durchmessers $d_{50}$ beschrieben. Der SPAN98 ist dabei wie folgt definiert:

$$SPAN98 = \frac{d_{98} - d_{10}}{d_{50}}$$

Der Ermittlung von $d_{98}$ und $d_{10}$ wird wiederum die (relative) Summenkurve der Partikelgrößenverteilung (s. o. "Messung des mittleren Durchmessers $d_{50}$) zu Grunde gelegt. Der Schnittpunkt des 98%-Ordinatenwertes mit der Summenkurve liefert auf der Abszissenachse sofort den gewünschten $d_{98}$-Wert, und der Schnittpunkt des 10%-Ordinatenwertes der Summenkurve mit der Kurve liefert auf der Abszissenachse den gewünschten $d_{10}$-Wert.

**SV-Wert**

Der SV-Wert des Polymers wurde durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel} - 1) * 1000.$$

**Glasübergangstemperaturen $T_g$**

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

**Siegelnahtfestigkeit**

Zur Bestimmung der Siegelnahtfestigkeit wird ein Folienstreifen (100 mm lang x 15 mm breit) auf die APET-Seite eines entsprechenden Streifens der APET/CPET-Menüschale gelegt und bei der eingestellten Temperatur von =150 °C, einer Siegelzeit von 0,5 s und einem Siegeldruck von 4 bar (Siegelgerät HSG/ET der Firma Brugger, Deutschland, beidseitig beheizte Siegelbacke) gesiegelt. Entsprechend Figur 2 werden die gesiegelten Streifen in die Zugprüfmaschine (z. B. Zwick, Deutschland) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).

**Bestimmung der Mindestsiegeltemperatur**

Mit dem Siegelgerät HSG/ET der Firma Brugger werden wie zuvor bei der Messung der Siegelnahtfestigkeit beschrieben, heißgesiegelte Proben (Siegelnaht 15mm x 100mm) hergestellt, wobei die Folie bei unterschiedlichen Temperaturen mit Hilfe zweier beheizter Siegelbacken bei einem Siegeldruck von 4bar und einer Siegeldauer von 0,5s gesiegelt wird. Die 180° Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 1,0N/15mm erreicht wird.

**Rauigkeit**

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

**Trübung**

Die Trübung nach Hölz wurde nach ASTM-D 1003-52 bestimmt.

**Glanz**

Der Glanz der Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Reißfestigkeit**

Die Reißfestigkeit der Folie wurde nach DIN 53455 gemessen. Die Prüfgeschwindigkeit ist 1 %/min; 23 °C; 50 % r.F.

**E-Modul**

Der E-Modul der Folie wurde nach DIN 53457 gemessen. Die Prüfgeschwindigkeit ist 1 %/min; 23 °C; 50 % r.F.

**Schrumpf**

Der Glanz der Folie wurde nach DIN 40634 gemessen. Die Prüfbedingungen sind 150 °C, 15 min.
Im Folgenden wird die Erfindung anhand von Beispielen näher erläutert.

**Beispiel 1**

Chips aus Polyethylenterephthalat wurden dem Extruder für die Basisschicht (B) zugeführt. Ebenfalls wurden Chips aus Polyethylenterephthalat und Partikel dem Extruder (Zweischneckenextruder) für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert.
Daneben wurde für die heißsiegelbare und peelfähige Deckschicht (A) eine Mischung, bestehend aus Polyester I, Polyester II und $SiO_2$-Partikeln, hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die Mischung wurde dem Zweischneckenextruder mit Entgasung für die siegelbare und peelfähige Deckschicht (A) zugeführt. Entsprechend den in unten stehender Tabelle angeführten Verfahrensbedingungen wurden die Rohstoffe in dem Zweischneckenextruder aufgeschmolzen und homogenisiert.
Dann wurden durch Koextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung eine transparente, dreischichtige Folie mit ABC-Aufbau in einer Gesamtdicke von 25 μm hergestellt. Die Dicken der beiden Deckschichten betragen jeweils 1 μm (vgl. auch Tabelle 2).

Deckschicht (A), Mischung aus:

| 60 Gew.-% | Polyester I (= Copolymeres aus 78 Mol-% Ethylenterephthalat, 22 Mol-% Ethylenisophthalat) mit einem SV-Wert von 850. Die Glasübergangstemperatur von Polyester I beträgt ca. 75 °C. Polyester I enthält darüber hinaus 5,0 Gew.-% ®Sylysia 430 (synthetisches $SiO_2$ , Fuji, Japan) mit einem Partikeldurchmesser von $d_{50}$ = 3,4 µm und einem SPAN98 von 1,7. Das Verhältnis von Partikeldurchmesser $d_{50}$ zu Deckschichtdicke $d_{(A)}$ beträgt 3,4:1 (vgl.Tabelle 2). |
|---|---|
| 40 Gew.-% | Polyester II (= Copolymeres, enthaltend 40 Mol-% Ethylenazelat, 50 Mol-% Ethylentherephthalat, 10 Mol-% Ethylenisophthalat) mit einem SV-Wert von 1000. Die Glasübergangstemperaturvon Polyester II beträgt ca. 0 °C. |

Basisschicht (B):

| 100 Gew.-% | Polyethylenterephthalat mit einem SV-Wert von 800 |
|---|---|

Deckschicht (C), Mischung aus:

| 85 Gew.-% | Polyethylenterephthalat mit einem SV-Wert von 800 |
|---|---|
| 15 Gew.-% | Masterbatch aus 99 Gew.-% Polyethylenterephthalat (SV-Wert von 800) und 1,0 Gew.-% Sylobloc 44 H (synthetisches $SiO_2$ , Grace, Worms), $d_{50}$ = 2,5 µm, SPAN98 = 1,9 |

Die Herstellungsbedingungen in den einzelnen Verfahrensschritten waren:

| Extrusion | Temperaturen | A-Schicht | 230 °C |
|---|---|---|---|
| | | B-Schicht | 280 °C |
| | | C-Schicht | 280 °C |
| | Temperatur der Abzugswalze | | 20 °C |
| Längsstreckung | Aufheiztemperatur | | 70-100 °C |
| | Strecktemperatur | | 105 °C |
| | Längsstreckverhältnis | | 4,0 |
| Querstreckung | Aufheiztemperatur | | 100 °C |
| | Strecktemperatur | | 135 °C |
| | Querstreckverhältnis | | 4,0 |
| Fixierung | Temperatur | | 230 °C |
| | Dauer | | 3 s |

In Tabelle 3 sind die Eigenschaften der Folie dargestellt. Laut Messungen (Spalte 2), beträgt die Mindestsiegeltemperatur der Folie gegenüber der APET-Seite von APET/CPET-Menüschalen 140 °C. Die Folie wurde bei 140, 160, 180 und 200 °C gegen die APET-Seite einer APET/CPET-Menüschalen gesiegelt (Siegeldruck 4 bar, Siegelzeit 0,5 s). Anschließend wurden Streifen des Verbundes aus erfindungsgemäßer Folie und APET/CPET-Menüschale mittels Spannungs-Dehnungstester entsprechend der vorgenannten Messvorschrift (vgl. Figur 2) auseinander gezogen. Für alle Siegeltemperaturen zeigte sich das gewünschte Abschälen der Folien von der Menüschale gemäß Figur 3b. Die gemessenen Siegelnahtfestigkeiten sind in Spalte 2 gelistet. Für alle Siegeltemperaturen wurden peelfähige Folien erhalten. Die Siegelnahtfestigkeiten liegen im unteren Bereich, d. h., dass sich die Folien ohne Kraftanstrengung von der Menüschale abziehen lassen (= easy peel). Weiterhin hatte die Folie die geforderten guten optischen Eigenschaften, zeigte das gewünschte Handling und das gewünschte Verarbeitungsverhalten.

**Beispiel 2**

Im Vergleich zu Beispiel 1 wurde die Deckschichtdicke der siegelfähigen Schicht (A) von 1,0 auf 1,5 µm bei sonst identischem Folienaufbau und sonst identischer Herstellungsweise angehoben. Die Mindestsiegeltemperatur der Folie gegenüber der APET-Seite von APET/CPET-Menüschalen beträgt jetzt 140 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind etwas höher als im Beispiel 1. Sie liegen aber immer noch im unteren Bereich, so dass sich die Folie ohne Kraftanstrengung von der Menüschale abziehen lässt. Es wurde eine etwas geringere Trübung der Folie gemessen; das Handling und das Verarbeitungsverhalten der Folie waren wie in Beispiel 1.

**Beispiel 3**

Im Vergleich zu Beispiel 1 wurde bei sonst identischem Folienaufbau die Zusammensetzung der Mischung für die siegelfähige Deckschicht (A) geändert. Die Zusammensetzung der einzelnen Komponenten blieb im Vergleich zu Beispiel 1 unverändert. Die Mischung besteht jetzt aus den folgenden Rohstoffanteilen:

- Polyester I = 40 Gew.-%,
- Polyester II = 60 Gew.-%

Auf Grund des höheren Anteils von Polyester II in der Mischung wurden die Verfahrensparameter in der Längsstreckung modifiziert. Die neuen Bedingungen für die Längsstreckung sind in unten stehender Tabelle aufgelistet:

| Längsstreckung | Aufheiztemperatur | 70-95 °C |
|---|---|---|
| | Strecktemperatur | 100 °C |
| | Längsstreckverhältnis | 3,8 |

Die Mindestsiegeltemperatur der Folie gegenüber der APET-Seite von APET/CPET-Menüschalen beträgt jetzt 138 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind etwas höher als im Beispiel 1. Sie liegen in einem mittleren Bereich, so dass sich die Folie ohne wesentliche Kraftanstrengung von der Menüschale abziehen lässt. Das Handling und das Verarbeitungsverhalten der Folie waren wie in Beispiel 1.

**Beispiel 4**

Im Vergleich zu Beispiel 3 wurde bei sonst identischem Folienaufbau die Zusammensetzung von Poyester II für die siegelfähige Deckschicht (A) geändert. Die Zusammensetzung der einzelnen Komponenten in der Mischung blieb im Vergleich zu Beispiel 3 unverändert. Die verwendete Mischung in Deckschicht (A) besteht jetzt aus folgenden Rohstoffanteilen:

| 40 Gew.-% | Polyester I, identisch zu Beispiel 1 |
|---|---|
| 60 Gew.-% | Polyester II, ®Vitel1912, (Polyester, Bostik-Findley, USA; enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C. |

Die Verfahrensparameter in der Längsstreckung entsprachen denjenigen in Beispiel 5. Die Mindestsiegeltemperatur der erfindungsgemäß hergestellten Folie gegenüber der APET-Seite von APET/CPET-Menüschalen beträgt jetzt 138 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beispiel 1. Sie liegen in einem mittleren Bereich, so dass sich die Folie ohne wesentliche Kraftanstrengung von der Menüschale abziehen lässt. Das Handling und das Verarbeitungsverhalten der Folie waren wie in Beispiel 1.

**Vergleichsbeispiel 1**

Im Vergleich zu Beispiel 1 wurde die Zusammensetzung der siegelfähigen Schicht (A) geändert. In der Deckschicht (A) wurde nur der auf Basis von aromatischen Säuren aufgebaute Polyester I verwendet:

| | |
|---|---|
| 100 Gew.-% | Polyester I (= Copolymeres aus 78 Mol-% Ethylenterephthalat und 22 Mol-% Ethylenisophthalat) mit einem SV-Wert von 850. Die Glasübergangstemperatur von Polyester I beträgt ca. 75 °C. Polyester I enthält darüber hinaus 5,0 % ®Sylysia 430. |

Die Herstellungsbedingungen in den einzelnen Verfahrensschritten wurden in der Längsstreckung der Glasübergangstemperatur des Deckschichtrohstoffes angepasst:

| Längsstreckung | Aufheiztemperatur | 70-115 °C |
|---|---|---|
| | Strecktemperatur | 120 °C |
| | Längsstreckverhältnis | 4,0 |

In Tabelle 3 sind die Eigenschaften der Folie dargestellt. Obwohl die Folie hochpigmentiert ist und die Pigmente Schwachstellen in der Siegelschicht darstellen, wurde für keine der angegebenen Siegeltemperaturen eine peelfähige Folie erhalten. Beim Abziehen der Folie von der Menüschale riss die Folie direkt ein und zeigte ein Diagramm gemäß Figur 3a. Die Folie zeigte "weldable" Verhalten und ist damit für die Lösung der genannten Aufgabe ungeeignet.

**Vergleichsbeispiel 2**

Es wurde das Beispiel 5 aus der EP-A 0 035 835 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Diagramm gemäß Figur 3a. Die Folie zeigte "weldable" Verhalten und ist damit für die Lösung der genannten Aufgabe ungeeignet.

**Vergleichsbeispiel 3**

Es wurde das Beispiel 1 aus der EP-A 0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Diagramm gemäß Figur 3a. Die Folie zeigte "weldable" Verhalten und ist damit für die Lösung der genannten Aufgabe ungeeignet.

**Vergleichsbeispiel 4**

Es wurde das Beispiel 22 aus der EP-A 0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Diagramm gemäß Figur 3a. Die Folie zeigte "weldable" Verhalten und ist damit für die Lösung der genannten Aufgabe ungeeignet.

# Tabelle 2

| | | Zusammensetzung Polyester I | | | | Zusammensetzung Polyester II | | | | | | | | Verhältnisse PI/PII-Polymer | Glastemperaturen PI/PII-Polymer | Folienaufbau | Foliendicke | Deckschicht-Dicken | | Partikel in Deckschicht (A) | | | Verhältnis $d_{50}/d_{(A)}$ |
| | | TS | IS | EG | NG | AzS | SeS | AdS | TS | IS | EG | BD | WS | | | | | (A) | (C) | Durchmesser | SPAN 98 | Konzentration | |
| | | Mol-% | | | | Mol-% | | | | | | | | Gew.-% | °C | | µm | µm | | µm | - | % | |
|---|---|---|---|---|---|---|---|---|---|---|---|---|---|---|---|---|---|---|---|---|---|---|---|
| Beispiele | 1 | 78 | 22 | 100 | | 40 | | | 50 | 10 | 100 | | | 60/40 | 75/0 | ABC | 25 | 1 | 1 | 3,4 | 1,8 | 3,00 | 3,4 |
| | 2 | 78 | 22 | 100 | | 40 | | | 50 | 10 | 100 | | | 60/40 | 75/0 | ABC | 25 | 1,5 | 1 | 3,4 | 1,8 | 2,75 | 2,27 |
| | 3 | 78 | 22 | 100 | | 40 | | | 50 | 10 | 100 | | | 40/60 | 75/0 | ABC | 25 | 1,5 | 1 | 3,4 | 1,8 | 2,00 | 2,27 |
| | 4 | 78 | 22 | 100 | | 40 | 1 | | 45 | 10 | >60 | | 4 | 40/60 | 75/-1 | ABC | 25 | 1 | 1 | 3,4 | 1,8 | 1,50 | 3,4 |
| V-Beispiele | 1 | 78 | 22 | 100 | | - | - | - | - | - | - | - | - | 100/0 | 75 | ABC | 25 | 1 | 1 | 3,4 | 1,8 | 5 | 3,4 |
| | 2 | 82 | 18 | 100 | | - | - | - | - | - | - | - | - | 100/0 | 75 | AB | 20 | 2,98 | - | 1,5+5 | - | 0,3 | 1,68 |
| | 3 | - | - | - | | 10 | | | 90 | | 100 | | | 0/100 | ca. 50 | AB | 17,2 | 4,1 | - | - | - | - | - |
| | 4 | 100 | - | 84,6 | 15,4 | - | 31,5 | 2,4 | 65 | 1,1 | 95,4 | | 4,6 | 50/50 | ca. 20 | AB | 11,5 | 2,5 | - | 2 | - | 0,25 | 0,8 |

TS Terephthalat, IS Isophthalat, EG Ethylen, BD Butan, NG Neopentyl
AzS Azelat, SeS Sebazat, AdS Adipat, WS weitere Dicarbonsäuren und Glykole

Tabelle 3

| | | Mindestsiegel-temperatur °C | Sieglenahtfestigkeit gegenüber APET/CPET-Menüschalen 140°C 160°C 180°C 200°C N/15m | | | | Schältest (= Peelverhalten) | Trübung % | Glanz A-Seite C-Seite | | Rauigkeiten A-Seite C-Seite μm | |
|---|---|---|---|---|---|---|---|---|---|---|---|---|
| Beispiele | 1 | 140 | 2,5 | 2,6 | 2,9 | 3,1 | ++++ | 17 | 75 | 130 | 259 | 60 |
| | 2 | 140 | 3,2 | 3,1 | 3,4 | 3,5 | ++++ | 12 | 80 | 130 | 278 | 60 |
| | 3 | 138 | 3,4 | 3,2 | 3,5 | 3,9 | ++++ | 17 | 72 | 130 | 224 | 60 |
| | 4 | 138 | 3,2 | 3,4 | 3,5 | 3,6 | ++++ | 14 | 85 | 130 | 212 | 60 |
| V-Beispiele | 1 | 105 | 1,7 | 3,5 | 5 | 8 | - | 23 | 55 | 130 | 310 | 60 |
| | 2 | 109 | 2 | 4,2 | 5,5 | 8,1 | - | 13 | 110 | 190 | 69 | 25 |
| | 3 | 112 | 1,5 | 2 | 4 | 6 | - | 4 | 150 | 190 | 33 | 20 |
| | 4 | 110 | 2 | 3 | 4 | 5 | - | 1,5 | 130 | 190 | 120 | 22 |

Schältest:    ++++   Bei allen Siegeltemperaturen wird Folie von der Menüschale "gepeelt", ohne dass dabei die Folie ein- oder weiterreißt. Einwandfreies, sattes, sauberes Peelen der Folie von Menüschale, auch im oberen Temperaturbereich bei hoher Siegelnahtfestigkeit.

EP 1 475 229 A2

**Patentansprüche**

1. Coextrudierte, transparente, biaxial orientierte Polyesterfolie, enthaltend eine Basisschicht (B) und eine heißsiegelbare und zumindest gegenüber APET peelfähige Deckschicht (A), wobei die heißsiegelbare und peelfähige Deckschicht (A) aus

   a) 80-98 Gew.-% Polyester und
   b) 2-10 Gew.-% anorganischen und/oder organischen Partikeln mit einem mittleren Durchmesser $d_{50}$ von 2,0 bis 8,0μm (bezogen auf die Masse der Deckschicht (A))
   besteht, wobei
   c) der Polyester aus 30-95 Mol-% an Einheiten aufgebaut ist, die auf mindestens eine aromatische Dicarbonsäure, und 5-70 Mol-% an Einheiten, die auf mindestens eine aliphatische Dicarbonsäure zurückgehen,
   d) das Verhältnis aus Teilchengröße $d_{50}$ und Schichtdicke $d_A$ der Deckschicht (A) größer als 1,3 ist und
   e) die Schichtdicke der Deckschicht (A) $d_A$ 0,5 bis 2,5μm beträgt.

2. Siegelbare und peelfähige Polyesterfolie nach Anspruch 1, **dadurch gekennzeichnet, dass** die aliphatischen Dicarbonsäuren ausgewählt sind aus einer oder mehreren der folgenden Substanzen: Pimelinsäure, Korksäure, Azelainsäure, Sebazinsäure, Glutarsäure und Adipinsäure.

3. Siegelbare und peelfähige Polyesterfolie nach Anspruch 1 oder 2, **dadurch gekennzeichnet, dass** die aromatischen Dicarbonsäuren ausgewählt sind aus einer oder mehreren der folgenden Substanzen: Terephthalsäure, Isophthalsäure und 2,6-Naphthalindicarbonsäure.

4. Siegelbare und peelfähige Polyesterfolie nach einem der Ansprüche 1 bis 3, **dadurch gekennzeichnet, dass** der Polyester der Deckschicht (A):

   30 bis 95 Mol-% Terephthalat,
   0 bis 25 Mol-% Isophthalat,
   5 bis 70 Mol -% Azelat,
   0 bis 50 Mol-% Sebazat,
   0 bis 50 Mol-% Adipat und
   mehr als 30 Mol -% Ethylen,

   jeweils bezogen auf die Gesamtdicarboxylat- bzw. Gesamtalkylenmenge, enthält.

5. Siegelbare und peelfähige Polyesterfolie nach einem der Ansprüche 1 bis 4, **dadurch gekennzeichnet, dass** die heißsiegelbare und peelfähige Deckschicht (A) eine Siegelanspringtemperatur (= Mindestsiegeltemperatur) gegenüber der APET-Seite von APET/CPET-Menüschalen von nicht mehr als 150 °C aufweist.

6. Siegelbare und peelfähige Polyesterfolie nach einem der Ansprüche 1 bis 5, **dadurch gekennzeichnet, dass** die heißsiegelbare und peelfähige Deckschicht (A) eine Siegelnahtfestigkeit gegenüber der APET-Seite von APET/CPET-Menüschalen von mindestens 1,0 N aufweist.

7. Siegelbare und peelfähige Polyesterfolie nach einem der Ansprüche 1 bis 6, **dadurch gekennzeichnet, dass** die heißsiegelbare und peelfähige Deckschicht (A) gegenüber der APET-Seite von APET/CPET-Menüschalen eine max. Siegeltemperatur von 220 °C aufweist.

8. Siegelbare und peelfähige Polyesterfolie nach einem der Ansprüche 1 bis 7, **dadurch gekennzeichnet, dass** der Polyester für die Deckschicht (A) aus zwei Polyestern I und II hergestellt wird.

9. Siegelbare und peelfähige Polyesterfolie nach Anspruch 8, **dadurch gekennzeichnet, dass** der Anteil des Polyesters I in der Deckschicht (A) 20 bis 80 Gew.-% beträgt.

10. Siegelbare und peelfähige Polyesterfolie nach Anspruch 9, **dadurch gekennzeichnet, dass** der Polyester I aus einem oder mehreren aromatischen Dicarboxylaten und einem oder mehreren aliphatischen Alkylenen besteht.

11. Siegelbare und peelfähige Polyesterfolie nach Anspruch 8, **dadurch gekennzeichnet, dass** der Anteil von Polyester II in der Deckschicht (A) 20 bis 70 Gew.-% beträgt.

**12.** Siegelbare und peelfähige Polyesterfolie nach Anspruch 11, **dadurch gekennzeichnet, dass** der Polyester II aus einem oder mehreren aromatischen Dicarboxylaten sowie einem oder mehreren aliphatischen Dicarboxylaten und einem oder mehreren aliphatischen Alkylenen besteht.

**13.** Siegelbare und peelfähige Polyesterfolie nach einem der Ansprüche 8 bis 12, **dadurch gekennzeichnet, dass** die Glasübergangstemperatur von Polyester I mehr als 50 °C beträgt.

**14.** Siegelbare und peelfähige Polyesterfolie nach einem der Ansprüche 8 bis 13, **dadurch gekennzeichnet, dass** die Glasübergangstemperatur von Polyester II weniger als 20 °C beträgt.

**15.** Siegelbare und peelfähige Polyesterfolie nach einem der Ansprüche 1 bis 14, **dadurch gekennzeichnet, dass** die Verteilung der Partikeldurchmesser der Partikel eine Streuung aufweist, die durch einen SPAN98 von ≤ 2,0 beschrieben wird.

**16.** Siegelbare und peelfähige Polyesterfolie nach einem der Ansprüche 1 bis 15, **dadurch gekennzeichnet, dass** die Folie zweischichtig ist und einen AB-Aufbau hat.

**17.** Siegelbare und peelfähige Polyesterfolie nach einem der Ansprüche 1 bis 15, **dadurch gekennzeichnet, dass** die Folie dreischichtig ist und einen ABC-Aufbau hat.

**18.** Verfahren zur Herstellung einer siegelbaren und peelfähigen Polyesterfolie nach Anspruch 1, bei dem die Polymere für die Basisschicht (B) und die Deckschicht (A), die aus einem Polyester aufgebaut ist, der aus

- 30-95 Mol-% an Einheiten aufgebaut ist, die auf mindestens eine aromatische Dicarbonsäure, und
- 5-70 Mol-% an Einheiten, die auf mindestens eine aliphatische Dicarbonsäure zurückgehen,

besteht, und gegebenenfalls die Deckschicht (C) getrennten Extrudern zugeführt werden, die Schmelzen dann in einer Mehrschichtdüse zu flachen Schmelzefilmen ausgeformt und übereinander geschichtet werden, anschließend der Mehrschichtfilm mit Hilfe einer Kühlwalze und gegebenenfalls weiterer Walzen abgezogen, verfestigt und danach biaxial streckorientiert und hitzefixiert wird, wobei die biaxiale Streckung aufeinanderfolgend durchgeführt wird, wobei zuerst längs (in Maschinenrichtung) und dann quer (senkrecht zur Maschinenrichtung) gestreckt wird, dass die Längsstreckung bei einer Temperatur im Bereich von 60 bis 130 °C und die Querstreckung im Bereich von 90 bis 140 °C durchgeführt wird und dass das Längsstreckverhältnis im Bereich von 2,0:1 bis 5,5:1 und das Querstreckverhältnis im Bereich von 2,4:1 bis 5,0:1 eingestellt wird.

**19.** Verfahren nach Anspruch 18, bei dem die Längsstreckung bei einer Temperatur im Bereich von 60 bis 120 °C und die Querstreckung im Bereich von 90 bis 140 °C durchgeführt wird und dass das Längsstreckverhältnis im Bereich von 2,0:1 bis 5,0:1 und das Querstreckverhältnis im Bereich von 2,4:1 bis 5,0:1 liegt.

**20.** Verfahren nach Anspruch 18, bei dem die Längsstreckung bei einer Temperatur im Bereich von 60 bis 110 °C und die Querstreckung im Bereich von 90 bis 140 °C durchgeführt wird und dass das Längsstreckverhältnis im Bereich von 2,0:1 bis 4,8:1 und das Querstreckverhältnis im Bereich von 2,4:1 bis 5,0:1 eingestellt wird.

**21.** Verwendung einer siegelfähigen Polyesterfolie nach einem der Ansprüche 1 bis 17 als Deckelfolie für die Abdeckung von Menüschalen aus APET/CPET.

**Peelfähige PET-Folie**

**Fertiggericht**

**APET/CPET-Tra**

**Fig. 1**  Menueschale (Tray) aus APET/CPET mit Fertiggericht und von Menueschale abziehbarer (peelfähiger) Folie

**PET-Folie**

**APET/CPET**

**Deckschicht (A)**

**Fig. 2**  Anordnung von "peelfähiger" Folie und Streifen einer APET/CPE-Menueschale im Zug-Dehnungs-Messgerät

**Fig. 3a** Reiss-Dehnungsdiagramm einer Folie mit "weldable" Verhalten

**Fig. 3b** Reiss-Dehnungsdiagramm einer Folie mit "peelable" Verhalten

**Fig. 4** Reiss-Dehnungsverhalten einer Folie mit "weldable" und "peelable" Verhalten